# EUROPEAN PATENT SPECIFICATION

(11) **EP 1 305 190 B1**
(45) Date of publication and mention of the grant of the patent: **05.04.2006**
(21) Application number: 01957971.3
(22) Date of filing: 16.07.2001
(51) Int. Cl.: B60R 16/06

(54) **DEVICE AND METHOD FOR DISCHARGING STATIC ELECTRIC CHARGES**
VORRICHTUNG UND METHODE ZUM ENTLADEN VON ELEKTROSTATISCHEN AUFLADUNGEN
DISPOSITIF ET PROCEDE DE DECHARGE DE CHARGES ELECTROSTATIQUES

(30) Priority: 27.07.2000 IT ME000006
(43) Date of publication of application: 02.05.2003
(73) Proprietor: Signorino, Giovanni, 98071 Capo d'Orlando (IT)
(72) Inventor: Signorino, Giovanni, 98071 Capo d'Orlando (IT)
(74) Representative: Gervasi, Gemma
(86) International application number: PCT/EP2001/008187
(87) International publication number: WO 2002/009979

(56) References cited:
- WO-A-92/20201
- DE-A- 3 606 975
- DE-A- 19 745 869
- GB-A- 2 322 839
- US-A- 5 179 497
- PATENT ABSTRACTS OF JAPAN vol. 010, no. 151 (M-483), 31 May 1986 (1986-05-31) & JP 61 006049 A (TAKAAKI IIDA), 11 January 1986 (1986-01-11)
- PATENT ABSTRACTS OF JAPAN vol. 1997, no. 01, 31 January 1997 (1997-01-31) & JP 08 227797 A (IO KAZUAKI;IOU SAYOKO; IO SHIRO; IO TAKESHI), 3 September 1996 (1996-09-03)

## Description

### Field of the invention

The present invention concerns a device and a method to prevent electrostatic charges from passing through the human body when getting out of the car and closing the door.

### Background art

A method according to the preamble of claim 1 and a device according to the preamble of claim 8 are generally known in the prior art.

These charges accumulate on the surface of the car due to various causes, such as ionisation of the air caused by lightning, friction due to movement of the car through the air, friction of the various belts in the engine pulley grooves, lack of humidity in the air, CO₂ from combustion, electrical fields etc.

These charges accumulate also in persons due to friction of synthetic underwear against the body and rubbing against the car seats; said charges reach voltage values of several tens of thousands of volts.

The phenomenon is perceived when the person puts his feet on the ground and at the same time pushes the car door to close it.

At present, a device commonly sold on the market consists of a flexible strip of conducting rubber earthed to the bodywork at one end with the other end trailing along the ground.

This system does not always work, however, for various reasons.

To discharge static electricity in a human body when an inside door handle is gripped by a hand, the document JP 61 00 6049 discloses to make the inside door handle conductive at its entire portion or part where a hand or finger comes into contact. The handle is electrically connected to a frame of a door. That is to say, the handle is covered with a conductive synthetic resin sheet, or a name plate serving as a ornament is attached to the handle. When a driver grips the handle upon getting off an automobile, the handle is brought into electrical contact with a driver's hand to permit static electricity generated by friction between a seat and clothes to be discharged to a chassis.

A ground-free device for removing static charge from semi-conductive or conductive bodies, and particularly useful for transportation vehicles is disclosed in W09220201. It uses a capacitor to effect and accelerate the discharge of static electricity from a charged body into surrounding air. The capacitor activates a voltage-controlled oscillator by which an efficiency of discharge of 100 % can be achieved. The voltage-controlled oscillator senses voltage of the capacitor and generates high voltage pulses of frequency that is proportional to the amount of charge on the body. High voltage, in turn, effects the removal of charges by means of air ionizer. The air ionizer having an electrode within a chamber and at least one needle electrode positioned in proximity to the end of the chamber. A high voltage is imposed between the chamber and the electrode for discharging a body susceptible to static charge build-up.

### Summary of the invention

According to an aspect of the present invention, a method is disclosed having the feature according to claim 1; according to other aspecbof the present invention, use of a bipolar element is disclosed having the features according to claim 7, a device is disclosed having the features according to claim 8 and a vehicle is disclosed having the features according to claim 11.

### Brief description of the figures

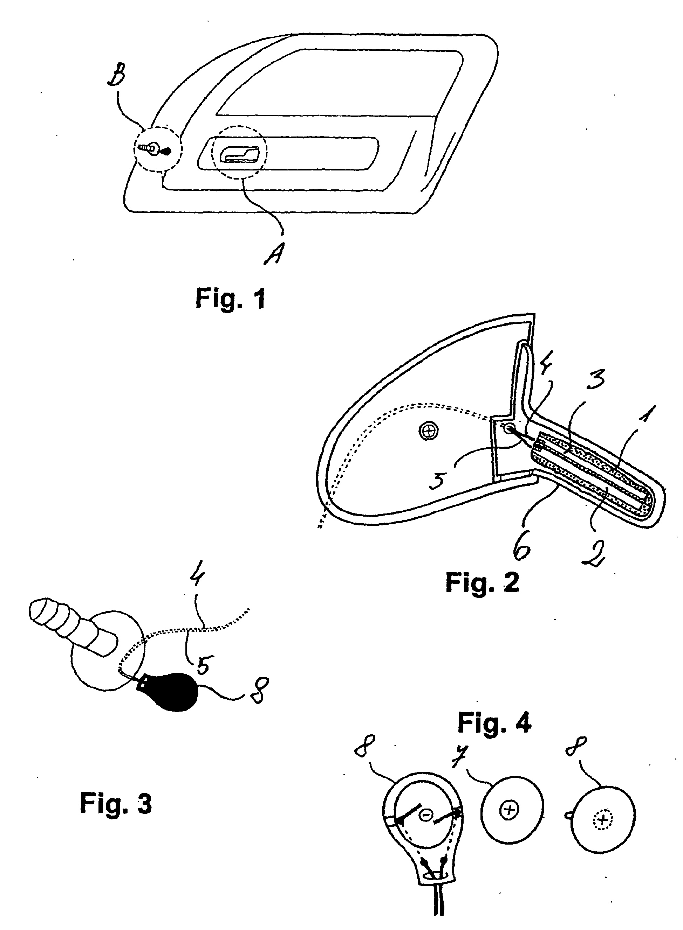

Further advantages of the present invention will appear more evidently to a man skilled in the art, from the following detailed description, with reference to the attached Figures, where
Figure 1 shows schematically a front view of the installation of a particular embodiment of the invention on a car door;
Figure 2 shows schematically the detail of the zone A of Figure 1, with the device of Figure 1 installed on the door opening handle;
Figure 3 shows schematically the detail of zone B of Figure 1, with the installation of the battery of the device of Figure 1;
Figure 4 shows an exploded schematic view of the battery and its housing, in the device of Figure 1.

### Detailed description of the invention

According to a preferred embodiment of the present invention, described as a non limiting example, the discharging device can consist of two copper tracks 1,2 on a flat rectangular strip of mylar 3, insulated from each other and at a distance for example of two millimetres; for example, the dimensions of this flat strip 3 can be two centimetres by seven and the back of the strip is adhesive. Two thin flexible copper conductors 4,5 insulated in sheaths, length approximately one metre, are welded at the ends of the two metal tracks 1,2.

The flat strip 3 can be cut with a pair of scissors to adapt it to the size and shape of the inside car door opening handle 6. Having removed the protective film of the adhesive, it is glued to the handle 6 so that every time the door is opened to get out of the car, the person's fingers come simultaneously into contact with the two copper tracks 1,2.

If there are electrostatic charges on the person's body, they will be discharged along the conductors 4,5, whether positive or negative.

The electrostatic charges are eliminated as they are transferred as soon as they are produced.

These copper conductors 4,5 pass inside the door panel and come out near the hinges where other cables are generally conveyed. The ends of these conductors 4,5, stripped of the insulating sheath for a stretch of approximately 30 millimetres, will be connected to the poles of a small 3 volt battery 7 -or a battery of any suitable voltage- positioned in a container 8. This container 8 has a spongy adhesive support 9 so that it can be easily glued onto the door wing and simultaneously keep two portions of conductors 4,5 (at a distance from each other) permanently in contact with the car door paint, before connection to the battery poles; this way the 3 volt battery 7 and the conductors 4,5 realize an electric circuit not grounded with the car iron body or the earth itself. The 3 volts battery 7 then disperses the electrostatic charges it accumulates because of the air humidity, oxydation processes and the other factors which usually cause a battery discharge. The electric resistance of the car paint avoid that the two stripped conductor parts are short-circuited, and the distance between the stripped connectors will be accordingly determined to avoid short-circuits as well.

In this way the electrostatic charges from the outside surface of the car (whether positive or negative) move along the conductors 4,5 and discharge onto the battery 7, due to difference in potential. This system can be used on all cars manufactured up to now and the same principle can be simply and inexpensively applied during manufacture of new cars, by connecting the conductors 4,5 to the car battery and providing a purposely-made handle.

In this case, advantageously one conductor 4 is connected to the ground battery pole, and the other conductor 5 is connected to the positive battery pole.

This system should help to solve problems such as sudden explosion of airbags, faulty operation of electronic control units and various devices on the car, hazards for people with pace-makers, eyes and ears with artificial parts, problems for people with any type of metal prosthesis and general discomfort for everyone caused by the phenomenon.

The above described device can be modified in several ways without departing from the present invention: generally, the copper conductors 1,2, or whatever conductive track, can be fixed to other parts 6 of a passenger compartment, and not necessarily on the passenger compartment side of the doors, or even on other parts outside the passenger compartment; the conductors 4,5 can be electrically connected to any suitable capacitive bipolar element 7, where capacitive bipolar element 7 means every electric component having suitable electric capacity, like for example a capacitor; likewise the stripped parts of the conductors 4,5 can be set in contact with the paint in other points of the body which are not necessarily the passenger compartment side of the doors; the strip of mylar 3 can be alternatively any other suitable support. Further modifications, obvious for a man skilled in the art, are of course possible.

## Claims

1. Method for discharging electic charges from a vehicle **characterized in** comprising the step of setting the non insulated parts (1,2) of at least two different electric conductors (4,5), not short circuited with each other, on a predetermined part (6) of a vehicle passenger compartment, in such a position one with respect to the other that a passenger, while grasping said part (6) of the passenger compartment, comes simultaneously into contact with both of said at least two non-insulated parts (1,2), and the step of connecting each of said at least two electric conductors (4,5) to a pole of a capacitive bipolar element (7), said capacitive bipolar element comprising a storage cell (7) or storage battery (7).

2. Method according to claim 1, **characterised in that** said part (6) of the passenger compartment belongs to a door.

3. Method according to claim 2, **characterised in that** said part (6) is either a door handle or a door lever.

4. Method according to one or more preceding claims, **characterised in that** each of said conductors (4,5) is in electrical contact with the bodywork coating.

5. Method according to one or more preceding claims, **characterised in that** one of said at least two conductors (4,5) is connected to the positive vehicle battery pole; and the other of said at least two conductors (4,5) is electrically connected to a vehicle iron body pole.

6. Method according to one or more claims from 1 to 4, **characterised in that** said at least two conductors (4,5) are connected to the poles of a storage cell (7) electrically insulated from the earth or the vehicle iron body.

7. Use of a capacitive bipolar element (7) and at least two different electric conductors (4,5) on a vehicle for discharging electric charges from a vehicle and/or a passenger, each of said two electric conductors (4, 5) having a non insulated part (1,2), said capacitive bipolar element comprising a storage cell (7) or storage battery (7), **characterised in that** said non insulated parts (1,2) are set, not short circuited with each other, on a predetermined part (6) of a vehicle passenger compartment, in such a position one with respect to the other that a passenger, while grasping said part (6) of the passenger compartment, comes simultaneously into contact with both of said at least two non-insulated parts (1,2), and each of said at least two electric conductors (4,5) is connected to a different pole of said capacitive bipolar element (7).

8. Device to carry out the method according to one or more claims from 1 to 6, comprising a capacitive bipolar element (7) and at least two electric conductors (4,5) each of which is connected to a pole of said capacitive bipolar element (7) and comprises a non-insulated part (1,2), said capacitive bipolar element comprising a storage cell (7) or storage battery (7), **characterised in that** it comprises a part of the passenger compartment of a vehicle, and each of said non-insulated parts (1,2) is set on said part of the passenger compartment in such a position one with respect to the other that a passenger, while grasping said part (6) of the passenger compartment, come simultaneously into contact with both of said at least two non-inslated parts (1,2).

9. Device according to claim 8, **characterised in that** said storage cell (7) consists essentially of the vehicle battery.

10. Device according to claim 8 or 9, **characterised in that** each of said at least two electric conductors (4,5) comprises a stripped part suitable to be set in electrical contact with the car paint.

11. Vehicle **characterised in that** it comprises a device according one or more claims from 8 to 10, where one of said at least two conductors (4,5) is connected to the positive battery pole, and another of said at least two conductors (4,5) is connected to a vehicle ground pole.

12. Vehicle **characterised in that** it comprises a device according to one or more claims from 8 to 10, where said capacitive bipolar element (7) comprises a battery electrically insulated from the earth or the vehicle iron body.

## Patentansprüche

1. Verfahren zum Entladen elektrischer Ladungen von einem Fahrzeug, **dadurch gekennzeichnet, dass** es den Schritt des Anbringens von nicht isolierten Teilen (1, 2) von mindestens zwei unterschiedlichen elektrischen Leitern (4, 5), welche gegenseitig nicht kurzgeschlossen sind, auf ein vorher bestimmtes Teil (6) eines Fahrzeuginnenraumes umfasst, und zwar in einer solchen Position zueinander, dass ein Fahrgast, während er an das genannte Teil (6) des Fahrzeuginnenraumes fasst, gleichzeitig mit beiden genannten mindestens zwei nicht isolierten Teilen (1, 2) in Kontakt kommt, und den Schritt des Anschließens von jedem der genannten mindestens zwei elektrischen Leiter (4, 5) an einen Pol eines kapazitiven bipolaren Elementes (7), wobei das genannte kapazitive bipolare Element eine Speicherzelle (7) oder eine Speicherbatterie (7) umfasst.

2. Verfahren gemäß Anspruch 1, **dadurch gekennzeichnet, dass** das genannte Teil (6) des Fahrzeuginnenraumes zu einer Tür gehört.

3. Verfahren gemäß Anspruch 2, **dadurch gekennzeichnet, dass** das genannte Teil (6) entweder ein Türgriff oder ein Türhebel ist.

4. Verfahren gemäß einem oder mehreren der vorherigen Ansprüche, **dadurch gekennzeichnet, dass** jeder der genannten Leiter (4, 5) mit der Karosseriebeschichtung elektrischen Kontakt aufweist.

5. Verfahren gemäß einem oder mehreren der vorherigen Ansprüche, **dadurch gekennzeichnet, dass** einer der genannten mindestens zwei Leiter (4, 5) mit dem positiven Pol der Fahrzeugbatterie verbunden ist, und der andere der genannten mindestens zwei Leiter (4, 5) mit der Fahrzeugmasse elektrisch verbunden ist.

6. Verfahren gemäß einem oder mehreren der Ansprüche von 1 bis 4, **dadurch gekennzeichnet, dass** die genannten mindestens zwei Leiter (4, 5) mit den Polen einer Speicherzelle (7) verbunden sind, welche gegenüber der Fahrzeugmasse elektrisch isoliert sind.

7. Verwendung von einem kapazitiven bipolaren Element (7) und von mindestens zwei unterschiedlichen elektrischen Leitern (4, 5) in einem Fahrzeug zum Entladen elektrischer Ladungen von einem Fahrzeug und/oder einem Fahrgast, wobei jeder der genannten zwei elektrischen Leiter (4, 5) einen nicht isolierten Teil (1, 2) aufweist, wobei das genannte kapazitive bipolare Element eine Speicherzelle (7) oder eine Speicherbatterie (7) umfasst, **dadurch gekennzeichnet, dass** die genannten nicht isolierten Teile (1, 2) gegenseitig nicht kurzgeschlossen an einem vorherbestimmten Teil (6) eines Fahrzeuginnenraumes angebracht sind, und zwar in einer solchen Position zueinander, dass ein Fahrgast, während er an das genannte Teil (6) des Fahrzeuginnenraumes fasst, gleichzeitig mit beiden der genannten mindestens zwei nicht isolierten Teile (1, 2) in Kontakt kommt, und jeder der genannten mindestens zwei elektrischen Leiter (4, 5) mit einem unterschiedlichen Pol des genannten kapazitiven bipolaren Elementes (7) verbunden ist.

8. Vorrichtung zur Ausführung des Verfahrens gemäß einem oder mehreren der Ansprüche von 1 bis 6, welche ein kapazitives bipolares Element (7) und mindestens zwei elektrische Leiter (4, 5) umfasst, von welchen jeder mit einem Pol des genannten kapazitiven bipolaren Elementes (7) verbunden ist und einen nicht isolierten Teil (1, 2) umfasst, wobei das genannte kapazitive bipolare Element eine Speicherzelle (7) oder eine Speicherbatterie (7) umfasst, **dadurch gekennzeichnet, dass** sie ein Teil des Fahrzeuginnenraumes umfasst, wobei jeder der genannten nicht isolierten Teile (1, 2) an dem genannten Teil des Fahrzeuginnenraumes angebracht ist, und zwar in einer solchen Position zueinander, dass ein Fahrgast, während er an das genannte Teil (6) des Fahrzeuginnenraumes fasst, gleichzeitig mit beiden der genannten mindestens zwei nicht isolierten Teile (1, 2) in Kontakt kommt.

9. Vorrichtung gemäß Anspruch 8, **dadurch gekennzeichnet, dass** die genannte Speicherzelle (7) im Wesentlichen aus der Fahrzeugbatterie besteht.

10. Vorrichtung gemäß Anspruch 8 oder 9, **dadurch gekennzeichnet, dass** jeder der genannten mindestens zwei elektrischen Leiter (4, 5) einen abisolierten Teil umfasst, welcher in elektrischen Kontakt mit der Fahrzeuglackierung gebracht werden kann.

11. Fahrzeug, **dadurch gekennzeichnet, dass** es eine Vorrichtung gemäß einem oder mehreren der Ansprüche von 8 bis 10 umfasst, wobei einer der genannten mindestens zwei Leiter (4, 5) mit dem positiven Pol der Fahrzeugbatterie verbunden ist, und der andere der genannten mindestens zwei Leiter (4, 5) mit der Fahrzeugmasse elektrisch verbunden ist.

12. Fahrzeug, **dadurch gekennzeichnet, dass** es eine Vorrichtung gemäß einem oder mehreren der Ansprüche von 8 bis 10 umfasst, wobei das genannte kapazitive bipolare Element (7) eine Batterie umfasst, welche gegenüber der Fahrzeugmasse elektrisch isoliert ist.

## Revendications

1. Procédé pour décharger les charges électrostatiques d'un véhicule, **caractérisé en ce qu'**il comprend l'étape de mise en place des parties non isolées (1,2) d'au moins deux conducteurs électriques distincts (4,5) non court-circuités mutuellement, sur une partie prédéfinie (6) de l'habitacle d'un véhicule, dans une position relative telle qu'un passager, lorsqu'il saisit ladite partie (6) de l'habitacle, vient simultanément en contact avec au moins deux desdites parties non isolées (1,2), et l'étape de connexion de chacun desdits conducteurs électriques (4,5) à un pôle d'un élément bipolaire capacitif (7), ledit élément bipolaire capacitif étant constitué par un accumulateur (7) ou une batterie (7).

2. Procédé selon la revendication 1, **caractérisé en ce que** ladite partie (6) de l'habitacle fait partie d'une portière.

3. Procédé selon la revendication 2, **caractérisé en ce que** ladite partie (6) est soit une poignée de portière soit un levier de portière.

4. Procédé selon une ou plusieurs des revendications précédentes, **caractérisé en ce que** chacun desdits conducteurs (4,5) est en contact électrique avec le revêtement de la carrosserie.

5. Procédé selon une ou plusieurs des revendications précédentes, **caractérisé en ce qu'**un desdits conducteurs (4,5) est relié au pôle positif de la batterie du véhicule, et **en ce que** l'autre desdits conducteurs (4,5) est relié électriquement à un pôle d'un corps en fer du véhicule.

6. Procédé selon une ou plusieurs des revendications 1 à 4, **caractérisé en ce que** lesdits conducteurs (4,5) sont reliés aux pôles d'un accumulateur (7) isolé électriquement de la terre ou de la carrosserie métallique du véhicule.

7. Utilisation d'un élément bipolaire capacitif (7) et d'au moins deux conducteurs électriques distincts (4,5) sur un véhicule pour décharger les charges électrostatiques d'un véhicule et/ou d'un passager, chacun desdits deux conducteurs (4,5) comprenant une partie non isolée (1,2), ledit élément bipolaire capacitif étant constitué par un accumulateur (7) ou une batterie (7), **caractérisée en ce que** lesdites parties non isolées (1,2) sont mises en place, non court-circuitées mutuellement, sur une partie prédéfinie (6) d'un habitacle de véhicule, dans une position relative telle qu'un passager, lorsqu'il saisit ladite partie (6) de l'habitacle, vient simultanément en contact avec au moins deux desdites parties non isolées (1,2), et **en ce que** chacun desdits conducteurs électriques (4,5) est relié à un pôle différent dudit élément bipolaire capacitif (7).

8. Dispositif pour mettre en oeuvre le procédé selon une ou plusieurs des revendications 1 à 6, comprenant un élément bipolaire capacitif (7) et au moins deux conducteurs électriques (4,5), ces derniers étant chacun relié à un pôle dudit élément bipolaire capacitif (7) et comprenant une partie non isolée (1,2), ledit élément bipolaire capacitif étant constitué par un accumulateur (7) ou une batterie (7), **caractérisé en ce qu'**il constitue une partie de l'habitacle d'un véhicule, et **en ce que** chacune desdites parties non isolées (1,2) est mise en place sur ladite partie de l'habitacle dans une position relative telle qu'un passager, lorsqu'il saisit ladite partie (6) de l'habitacle, vient simultanément en contact avec au moins deux desdites parties non isolées (1,2).

9. Dispositif selon la revendication 8, **caractérisé en ce que** ledit accumulateur (7) est principalement constitué par la batterie du véhicule.

10. Dispositif selon la revendication 8 ou 9, **caractérisé en ce que** chacun desdits conducteurs électriques (4,5) comprend une partie dénudée adaptée pour être mise en contact électrique avec la peinture de la voiture.

11. Véhicule **caractérisé en ce qu'**il comprend un dispositif selon une ou plusieurs des revendications 8 à 10, dans lequel l'un desdits conducteurs (4,5) est relié au pôle positif de la batterie, et un autre desdits conducteurs (4,5) est relié à un point de mise à la terre du véhicule.

12. Véhicule **caractérisé en ce qu'**il comprend un dispositif selon une ou plusieurs des revendications 8 à 10, dans lequel ledit élément bipolaire capacitif (7) est constitué par une batterie isolée électriquement de la terre ou de la carrosserie métallique du véhicule.
